(19) Europäisches Patentamt
European Patent Office
Office européen des brevets

(11) **EP 3 587 538 A1**

(12) # EUROPEAN PATENT APPLICATION
published in accordance with Art. 153(4) EPC

(43) Date of publication:
**01.01.2020 Bulletin 2020/01**

(21) Application number: **17898313.6**

(22) Date of filing: **22.02.2017**

(51) Int Cl.:
**C10L 1/32** *(2006.01)*     **B63H 21/38** *(2006.01)*
**F02M 25/022** *(2006.01)*

(86) International application number:
**PCT/JP2017/006568**

(87) International publication number:
**WO 2018/154651 (30.08.2018 Gazette 2018/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Oshima Shipbuilding Co., Ltd.
Saikai-shi, Nagasaki 857-2494 (JP)**

(72) Inventors:
• **TAKAISHI, Tatsuo
Saikai-shi
Nagasaki 857-2494 (JP)**
• **IWASHITA, Tatsuro
Saikai-shi
Nagasaki 857-2494 (JP)**

(74) Representative: **V.O.
P.O. Box 87930
2508 DH Den Haag (NL)**

(54) **FUEL COMPOSITION, SHIP, AND FUEL COMPOSITION AUTOMATIC SWITCHING SYSTEM**

(57)     A fuel composition comprising an emulsion containing: one or more low-sulfur fuels selected from the group consisting of light cycle oil, an oxygen-containing hydrocarbon-based fuel, and a biofuel; gas-to-liquid oil; and water.

**Description**

Technical Field

The present invention relates to a fuel composition, a ship, and an automatic fuel composition-switching system.

Background Art

Conventionally, heavy fuel oil has been widely used as a marine fuel. However, emission control for sulfur oxides (SOx) is increasingly strengthened in recent years, and areas in which use of heavy fuel oil, which is sulfur-rich, as a marine fuel is acceptable are becoming narrower. Moreover, use of heavy fuel oil as a marine fuel is expected to become completely impractical in the near future.

In such circumstances, a low-sulfur fuel, the sulfur content of which is, for example, as low as 0.5% by mass or less, has been received attention as an alternative marine fuel to heavy fuel oil. Examples of the low-sulfur fuel include light cycle oil (hereinafter, referred to as "LCO") (e.g., Patent Literature 1), and an oxygen-containing hydrocarbon-based fuel and a biofuel such as alcohols including ethanol and vegetable oils including rapeseed oil. Among them, LCO refers to fractions having higher boiling points than gasoline among fractions obtained by allowing vacuum gas oil or residual oil to pass through a fluid catalytic cracker (FCC), in other words, lighter fractions (boiling point range: around 220 to 430°C) among cracked gas oils, and is also called "cracked light gas oil". Since LCO has a low sulfur content, use of LCO as a marine fuel advantageously leads to reduction of the amount of SOx emitted from ships.

In addition, the amount of nitrogen oxides (NOx) emitted from ships is controlled. Use of an emulsion fuel obtained by mixing a fuel oil and water as a fuel for a diesel engine is known as a method for reducing the amount of NOx emitted (Patent Literature 2). An emulsion fuel generates a reduced amount of NOx formed (emitted) because the combustion temperature of the emulsion fuel is lower than that when a fuel oil is directly burned.

However, an emulsion fuel generally has low ignitability, and hence has the problem of ignition delay and the resulting frequent occurrence of abnormal vibration for diesel engines. Patent Literature 3 discloses, as a solution to this problem, a diesel engine including a pilot injector configured to inject an auxiliary fuel having a high Cetane number such as marine diesel oil prior to injection of an emulsion fuel.

Citation List

Patent Literature

Patent Literature 1: Japanese Patent Laid-Open No. 2001-158890
Patent Literature 2: Japanese Patent Laid-Open No. 2014-221872
Patent Literature 3: Japanese Patent Laid-Open No. 08-246961

Summary of Invention

Technical Problem

Use of an emulsion fuel obtained by mixing a low-sulfur fuel such as LCO and water as a marine fuel is expected to enable simultaneous reduction of the amounts of SOx and NOx emitted from ships. However, an emulsion fuel obtained by mixing LCO and water has the problem of even lower ignitability than a common emulsion fuel because LCO has a low Cetane number. For this reason, an emulsion fuel obtained by mixing LCO and water is hard to use as a main fuel for diesel engines. In particular, an emulsion fuel obtained by mixing LCO and water is hard to use for conventional diesel engines including no pilot injector.

Meanwhile, use of an emulsion fuel obtained by mixing a fuel oil having higher ignitability and a lower sulfur content and water instead of a low-sulfur fuel such as LCO may solve the problem of low ignitability. This causes, however, a problem of high fuel cost, and hence there are many points to be improved for using such an emulsion fuel.

The present invention was made in view of such circumstances, and an object of the present invention is to provide a fuel composition which is obtained by mixing a specific low-sulfur fuel and water and exhibits ignitability better than that expected, resulting in reduced fuel cost from that expected, a ship using the fuel composition as a fuel for a propulsion engine, and an automatic fuel composition-switching system to be installed in the ship.

Solution to Problem

The present inventors have made diligent examination to achieve the above object, and surprisingly found that when a mixed oil obtained by mixing a low-sulfur fuel such as LCO and a specific fuel oil is emulsified with water, the emulsion exhibits ignitability further superior to that expected for an emulsion obtained by emulsifying a specific fuel oil solely with water, thereby completing the present invention.

That is, the fuel composition of the present invention is a fuel composition containing an emulsion containing: one or more low-sulfur fuels selected from the group consisting of light cycle oil, an oxygen-containing hydrocarbon-based fuel, and a biofuel; and gas-to-liquid oil. This fuel composition exhibits ignitability further better than that expected for a fuel composition obtained by emulsifying gas-to-liquid oil solely with water. Specifically, in the case of non-emulsion fuels, the ignitability of a mixed fuel obtained by mixing gas-to-liquid oil and the above low-sulfur fuels such as light cycle oil decreases relatively more than that of single gas-to-liquid oil. On the other hand, in the case of emulsion fuels which additionally contain water, the ignitability of the fuel composition of the present invention obtained by mixing a low-sulfur fuel such as light cycle oil as described above in addition to gas-to-liquid oil and water decreases more than that of an emulsion fuel containing gas-to-liquid oil and water by a lower extent than in the case of non-emulsion fuels. This results in reduced fuel cost from that expected.

In the fuel composition of the present invention, the low-sulfur fuels preferably contain light cycle oil, and the sulfur content of the low-sulfur fuels is preferably 0.5% by mass or less. Further, in the fuel composition of the present invention, the content of water is preferably more than 10% by mass and less than 150% by mass, and more preferably 70% by mass or more and 120% by mass or less, based on a total mass of the low-sulfur fuels and the gas-to-liquid oil of 100% by mass. In the fuel composition of the present invention, the emulsion is preferably a water-in-oil emulsion. Further, In the fuel composition of the present invention, the content of the gas-to-liquid oil is preferably 30% or more based on the total mass of the low-sulfur fuels and the gas-to-liquid oil.

The ship of the present invention is a ship using the above fuel composition as a fuel for a propulsion engine. The ship of the present invention preferably includes: tanks configured to store water, the above low-sulfur fuels, and gas-to-liquid oil, respectively; and a mixer configured to mix the water, the low-sulfur fuels, and the gas-to-liquid oil fed from the respective tanks to produce the fuel composition. The ship of the present invention preferably includes: a tank configured to store water; a tank configured to store a mixed oil prepared by mixing the above low-sulfur fuels and gas-to-liquid oil; and a mixer configured to mix the water and the mixed oil fed from the respective tanks to produce the fuel composition. The ship of the present invention preferably includes the following automatic fuel composition-switching system installed therein.

The automatic fuel composition-switching system of the present invention is an automatic fuel composition-switching system to be installed in the above ship, and includes: an electronic chart unit storing control area boundary information indicating a location of a border between a control area where emission of air pollutants is more strictly controlled than in a non-control area, and the non-control area; a position information acquisition unit configured to acquire information on the current position of the ship; and a mixing ratio changer configured to select a first fuel composition at least complying with emission control for air pollutants in the control area or a second fuel composition acceptable for use in the non-control area and form the selected fuel composition in the mixer by changing the mixing ratio of a raw material oil and water in the mixer, wherein the mixing ratio changer is configured to compare information on the current position of the ship acquired by the position information acquisition unit and the control area boundary information stored in the electronic chart unit, and form the first fuel composition in the mixer in a case where the ship is located in the control area and form the second fuel composition in the mixer in a case where the ship is located in the non-control area. In the automatic fuel composition-switching system of the present invention, the mixing ratio changer is preferably configured to change a fuel composition formed in the mixer to the first fuel composition before the ship enters the control area when the ship is to move from the non-control area into the control area, and to the second fuel composition after the ship exits the control area when the ship is to move from the control area to the non-control area.

Advantageous Effects of Invention

The present invention can provide: a fuel composition which is obtained by mixing a specific low-sulfur fuel and water and exhibits ignitability better than that expected, resulting in reduced fuel cost from that expected; a ship using the fuel composition as a fuel for a propulsion engine; and an automatic fuel composition-switching system to be installed in the ship.

Brief Description of Drawings

[Figure 1] Figure 1 is a conceptual diagram illustrating the configuration of the ship according to one aspect of the present invention.

[Figure 2] Figure 2 is a conceptual diagram illustrating the configuration of the ship according to one aspect of the present invention as another embodiment.

[Figure 3] Figure 3 is a conceptual diagram illustrating the hardware configuration of the automatic fuel composition-switching system according to one aspect of the present invention.

[Figure 4] Figure 4 is a conceptual diagram illustrating the concepts of a control area, a global area, and a preparation area.

[Figure 5] Figure 5 is a flow chart illustrating a process by a mixing ratio change program according to one aspect of the present invention.

Description of Embodiments

Hereinafter, a mode for practicing the present invention (hereinafter, simply referred to as "the present embodiment") will be described in detail with reference to the drawings, as necessary; however, the present invention is not limited to the present embodiment below. The present invention can be variously modified unless the modification deviates from the spirit. It should be noted that an identical reference sign is used for identical parts in the drawings, and redundant description will be omitted. The positional relationship such as up and down and right and left is based on that illustrated in each drawing, unless otherwise specified. In addition, the dimensional ratio of each drawing is not limited to the illustrated ratio.

(Fuel composition)

The fuel composition of the present embodiment is a fuel composition containing an emulsion containing: one or more low-sulfur fuels selected from the group consisting of light cycle oil, an oxygen-containing hydrocarbon-based fuel, and a biofuel; gas-to-liquid oil; and water. The fuel composition of the present embodiment exhibits ignitability further better than that expected for a fuel composition obtained by emulsifying gas-to-liquid oil solely with water. Specifically, in the case of non-emulsion fuels, the ignitability of a mixed fuel obtained by mixing gas-to-liquid oil and the above low-sulfur fuels such as light cycle oil decreases relatively more than that of single gas-to-liquid oil. On the other hand, in the case of emulsion fuels which additionally contain water, the ignitability of the fuel composition of the present invention obtained by mixing a low-sulfur fuel such as light cycle oil as described above in addition to gas-to-liquid oil and water decreases more than that of an emulsion fuel containing gas-to-liquid oil and water by a lower extent than in the case of non-emulsion fuels. This results in reduced fuel cost from that expected. The fuel composition of the present embodiment contains low-sulfur fuels such as light cycle oil, and hence has a low sulfur content and the amount of sulfur oxides emitted in combustion is small. Since the fuel composition of the present embodiment is an emulsion containing low-sulfur fuels such as light cycle oil and water, the combustion temperature can be lowered and the amount of nitrogen oxides emitted in combustion can be reduced. The fuel composition of the present embodiment naturally has improved ignitability by virtue of the gas-to-liquid oil contained therein, and exhibits ignitability further better than that expected, as described above. For this reason, when the fuel composition of the present embodiment is used as a fuel for a diesel engine, installation of a unit for pilot injection of a fuel having a high Cetane number into the diesel engine is not required. That is, the present embodiment can provide a fuel with low emission of sulfur oxides and nitrogen oxides, the fuel being applicable to conventional diesel engines including no pilot injector. Further, the fuel composition of the present embodiment exhibits a fuel consumption rate better than that expected for a fuel composition obtained by emulsifying gas-to-liquid oil solely with water. Specifically, in the case of non-emulsion fuels, the fuel consumption rate of a mixed fuel of gas-to-liquid oil and the above low-sulfur fuels such as light cycle oil decreases only slightly in comparison with that of single gas-to-liquid oil. On the other hand, in the case of emulsion fuels which additionally contain water, the fuel consumption rate of the fuel composition of the present embodiment obtained by mixing a low-sulfur fuel such as light cycle oil as described above in addition to gas-to-liquid oil and water decreases in comparison with that of an emulsion fuel containing gas-to-liquid oil and water by a higher extent than in the case of non-emulsion fuels.

(Low-sulfur fuels)

The low-sulfur fuels according to the present embodiment are one or more fuels selected from the group consisting of light cycle oil, an oxygen-containing hydrocarbon-based fuel, and a biofuel. Here, the "biofuel" is a fuel produced from an organic resource derived from agriculture, forestry, or fisheries (except those produced by simple drying or cutting, or another simple method) as a raw material, and examples thereof include ethanol obtained by fermentation, methanol obtained by fermentation or pyrolysis, fatty acid methyl esters produced from vegetable oils (biodiesel fuels), and liquid fuels such as hydrocarbon oils. The "oxygen-containing hydrocarbon-based fuel" is a fuel mainly having a chemical structure of hydrocarbon and having an oxygen atom in a part of the structure (except those corresponding to a biofuel). Examples of such an oxygen-containing hydrocarbon-based fuel include alcohols (those industrially synthesized) such as methanol and ethanol, and vegetable oils such as rapeseed oil and pine oil. In order to effectively and reliably exert the advantages of the present invention, the low-sulfur fuels preferably contain light cycle oil, and more preferably consist of light cycle oil.

The sulfur content of the low-sulfur fuels is preferably 0.5% by mass or less, and more preferably 0.4% by mass or less. It is particularly preferable that the low-sulfur fuels be sulfur-free. Thereby, the emission of SOx in combustion of the fuel composition of the present embodiment can be more reduced.

(Light cycle oil)

Light cycle oil (LCO) refers to fractions having higher boiling points than gasoline among fractions obtained by allowing vacuum gas oil or residual oil to pass through a fluid catalytic cracker and contact a catalyst, in other words, lighter fractions (boiling point range: around 220°C or higher and 430°C or lower) among cracked gas oils. Light cycle oil is also called "cracked light gas oil". The Cetane number of light cycle oil is, for example, 20 or more and 30 or less. Here, the "Cetane number" can be determined through measurement under air conditions simulating a diesel engine (setting the initial pressure in the combustion chamber to 4.5 MPa, the initial temperature in the combustion chamber to 550°C, and the fuel-feeding pressure to 55 MPa) together with conditions for standard fuel. For example, the cetane number is that determined by using a fuel ignition analyzer (FIA) in the following manner: the initial pressure in the combustion chamber is set to 4.5 MPa, the initial temperature in the combustion chamber to 550°C, the fuel-feeding pressure to 55 MPa, the fuel-feeding time to 15 ms, and the diameter of the fuel injection nozzle to 0.16 mm, and a point of time at which the increase of the pressure in the combustion chamber has reached 0.02 MPa from the initial pressure is defined as ignition time, and the time required for reaching the ignition time is defined as ignition delay time; and the Cetane number of a sample is determined from an expression of a standard curve representing the relation between ignition delay times and Cetane numbers determined by using isocetanes as standard fuels of low Cetane number and n-cetanes as standard fuels of high Cetane number, namely, the following expression (1):

$$CN = 51.052(t - 1.254)^{-0.537} \quad (1)$$

wherein CN denotes a Cetane number, and t denotes the ignition delay time.

The sulfur content of the light cycle oil is, for example, 0.1% by mass or more and 0.5% by mass or less, and may be 0.2% by mass or more and 0.3% by mass or less. Further, the specific gravity of the light cycle oil at 15°C is, for example, 920 g/m$^3$ or higher and 950 kg/m$^3$ or lower, and the viscosity at 50°C is, for example, 2.0 mm$^2$/s or higher and 3.0 mm$^2$/s or lower, the content of saturated hydrocarbons is, for example, 15% by volume or more and 30% by volume or less, and the content of aromatic hydrocarbons is, for example, 50% by volume or more and 80% by volume or less. However, the characteristics of the light cycle oil are not limited thereto.

(Gas-to-liquid oil)

Gas-to-liquid oil is a kind of artificial petroleum obtained in a series of processes in which hydrocarbon gas having a few, about one to several carbon atoms as a raw material is subjected to Fischer-Tropsch reaction to synthesize a large hydrocarbon molecule including up to 100 or more carbon atoms linked together, and then the number of carbon atoms is reduced to about 11 to 15 through a hydrocracking process. In addition, gas-to-liquid oil is abbreviated as GTL. The Cetane number of the gas-to-liquid oil is, for example, 80 to 90. The gas-to-liquid oil is substantially sulfur-free. The content of aromatic hydrocarbons in the gas-to-liquid oil is, for example, less than 0.1% by volume. However, the characteristics of the gas-to-liquid oil are not limited thereto.

(Ratios of components)

The content of the gas-to-liquid oil in the fuel composition of the present embodiment is preferably 20% by mass or more, and more preferably 20% by mass or more and 80% by mass or less, based on a total mass of the low-sulfur fuels and the gas-to-liquid oil of 100% by mass. By virtue that the content of the gas-to-liquid oil in the fuel composition is 20% by mass or more based on a total mass of the low-sulfur fuels and the gas-to-liquid oil of 100% by mass, the fuel composition can exhibit ignitability further better than that expected, and can more stably exist as an emulsion, in particular, more stably exist as a water-in-oil emulsion. In addition, the amounts of nitrogen oxides (NOx) and sulfur oxides (SOx) in exhaust gas emitted in diesel combustion of the fuel composition can be more reduced, and the fuel consumption rate can be much more reduced. By virtue that the content of the gas-to-liquid oil in the fuel composition is 80% by mass or less based on a total mass of the low-sulfur fuels and the gas-to-liquid oil of 100% by mass, the fuel composition can exhibit ignitability further better than that expected, the fuel cost can be more reduced, and furthermore the fuel consumption rate can be much more reduced. From the same viewpoints, the content of the gas-to-liquid oil is more preferably 30% by mass or more and 70% by mass or less, and even more preferably 35% by mass or more and 65% by mass or less, based on a total mass of the low-sulfur fuels and the gas-to-liquid oil of 100% by mass. In particular, the configuration such that the content of the gas-to-liquid oil in the fuel composition is 30% by mass or more is preferable also because the configuration readily complies with SOx control in a more reliable manner.

The content of water in the fuel composition of the present embodiment is preferably 10% by mass or more and 150% by mass or less based on a total mass of the low-sulfur fuels and the gas-to-liquid oil of 100% by mass. By virtue that the content of water in the fuel composition is 10% by mass or more based on a total mass of the low-sulfur fuels and the gas-to-liquid oil of 100% by mass, the amounts of NOx and soot in exhaust gas emitted in diesel combustion of the fuel composition can be more reduced, and the fuel composition can exhibit ignitability further better than that expected. In addition, the fuel composition can more stably exist as an emulsion, in particular, more stably exist as a water-in-oil emulsion. Furthermore, the fuel consumption rate can be much more reduced. On the other hand, by virtue that the content of water in the fuel composition is 150% by mass or less based on a total mass of the low-sulfur fuels and the gas-to-liquid oil of 100% by mass, the ignitability can be kept suitable. From the same viewpoints, the content of water in the fuel composition is more preferably 30% by mass or more and 150% by mass or less, further preferably more than 30% by mass and less than 150% by mass, furthermore preferably 70% by mass or more and 120% by mass or less, and particularly preferably 85% by mass or more and 110% by mass or less, based on a total mass of the low-sulfur fuels and the gas-to-liquid oil of 100% by mass.

(Emulsion)

The fuel composition of the present embodiment may be an oil-in-water emulsion or a water-in-oil emulsion, but is preferably a water-in-oil emulsion. By virtue that the fuel composition is a water-in-oil emulsion, members to be contacted with the fuel composition in a propulsion engine can be effectively and reliably prevented from rusting. In order to allow the fuel composition of the present embodiment to stably exist as a water-in-oil emulsion, the content of water can be set somewhat higher or a surfactant having an HLB value of about 3 to 10 can be used..

The fuel composition of the present embodiment may contain appropriate amounts of components commonly contained in fuel compositions, unless achievement of the object of the present invention is inhibited.

The Cetane number of the fuel composition of the present embodiment is preferably 15 or higher, more preferably 18 or higher, further preferably 20 or higher, and particularly preferably 25 or higher. By virtue of the cetane number of 15 or higher, the fuel composition has better ignitability, for example, allowing the fuel composition to be used as a fuel even for a diesel engine without pilot injector unit. Although there is no limitation to the upper limit of the cetane number, the Cetane number may be, for example, 90 or lower, 80 or lower, or 70 or lower.

The fuel composition of the present embodiment can be produced, for example, by adding the gas-to-liquid oil (GTL), water, and, as necessary, a surfactant to the low-sulfur fuels, and mixing and stirring the resultant.

The fuel composition of the present embodiment is preferably used as a marine fuel (distillate marine fuel oil and residual marine fuel oil). It is preferable for the fuel composition of the present embodiment to meet quality standards defined in ISO 8217 for suitable use to such applications. For example, the sulfur content is preferably 2.0% by mass or less, more preferably 1.5% by mass or less, and further preferably 1.0% by mass or less. The dynamic viscosity at 50°C may be 180 $mm^2$/s or higher, or 380 $mm^2$/s or higher. The dynamic viscosity at 40°C may be 1.4 $mm^2$/s or higher and 5.5 $mm^2$/s or lower, 2.0 $mm^2$/s or higher and 11.0 $mm^2$/s or lower, or 2.0 $mm^2$/s or higher and 6.0 $mm^2$/s or lower. Further, the density at 15°C is 991 kg/m3 or lower, more preferably 900 kg/m3, and further preferably 890 kg/m3 or lower. Furthermore, the pour point is preferably 30°C or lower, more preferably 6°C or lower, further preferably 0°C or lower, and particularly preferably -6°C or lower. In addition, the content of aluminum and silicon is preferably 60 mg/kg or less, and more preferably 50 mg/kg or less.

(Ship)

The ship of the present embodiment uses the above-described fuel composition as a fuel for a propulsion engine, and preferably includes an automatic fuel composition-switching system, described later, installed therein. This ship can reduce the amount of NOx emitted from the ship by using the fuel composition of the present embodiment as a fuel for a propulsion engine. If the amount of nitrogen oxides (NOx) emitted is reduced below the regulatory limit of the amount emitted, the ship can avoid limitation of areas to cruise. Reduction of the amount of nitrogen oxides (NOx) emitted, even if the amount emitted is over the regulatory limit of the amount emitted, allows use of a unit with a smaller capacity for removal of nitrogen oxides (NOx) in the exhaust gas (denitrator), and hence the construction cost and operation cost for the ship can be reduced.

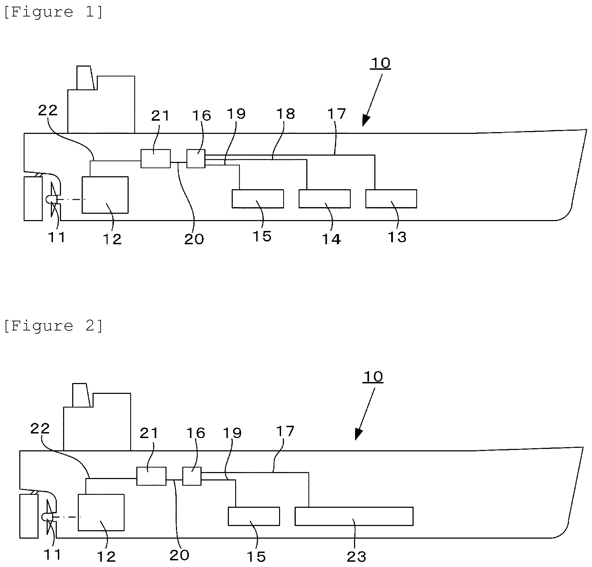

Figure 1 is a conceptual diagram illustrating the configuration of the ship 10 of the present embodiment. As illustrated in Figure 1, the ship 10 includes a propeller 11 and a diesel engine 12 to rotationally drive the propeller 11. Since the ship 10 is propelled by the thrust produced by the propeller 11 rotationally driven, the diesel engine 12 corresponds to a propulsion engine of the ship 10. The ship 10 further includes an LCO tank 13 to store light cycle oil (LCO), a GTL tank 14 to store gas-to-liquid oil (GTL), a fresh water tank 15 to store fresh water, and a mixer 16 to produce an emulsion fuel which is the fuel composition of the present embodiment.

The mixer 16 is communicating with the LCO tank 13, the GTL tank 14, and the fresh water tank 15 via pipelines 17, 18, and 19, respectively, each with a pump not illustrated. Light cycle oil (LCO), gas-to-liquid oil (GTL), and fresh water stored in the LCO tank 13, the GTL tank 14, and the fresh water tank 15, respectively, are fed into the mixer 16 through the pipelines 17, 18, and 19, respectively. The mixer 16 mixes and stirs them to produce an emulsion fuel. The emulsion fuel produced in the mixer 16 is fed into a buffer tank 21 through a pipeline 20, and temporarily stored therein. The emulsion fuel temporarily stored in the buffer tank 21 is fed into the diesel engine 12 through a pipeline 22, and used as a main fuel for the diesel engine 12. The buffer tank 21 is a tank for adjustment of the gap between the production rate of the emulsion fuel in the mixer 16 and the consumption rate of the aqueous emulsion fuel in the diesel engine 12. Further, a pump not illustrated is disposed in the middle of each of the pipelines 20 and 21. The diesel engine 12, the mixer 16, the pumps not illustrated, and so on, are each controlled by a controller not illustrated.

The ship 10 may be configured as illustrated in Figure 2. Specifically, a mixed oil tank 23 may be included in place of the LCO tank 13 and the GTL tank 14. The mixed oil tank 23 is a tank to store a mixed oil produced in advance by mixing light cycle oil (LCO) and gas-to-liquid oil (GTL) in a plant on land. The ship 10 illustrated in Figure 2 is different from the ship 10 illustrated in Figure 1 in that the mixer 16 mixes and stirs the mixed oil fed from the mixed oil tank 23 and fresh water fed from the fresh water tank 15 to produce an aqueous emulsion fuel. There are no differences between the ship 10 illustrated in Figure 1 and the ship 10 illustrated in Figure 2 for the other configurations.

The ship of the present embodiment uses the above fuel composition for a propulsion engine, and hence can comply with emission control for SOx and NOx on ships with ease. Accordingly, the present embodiment can provide a ship free from limitation of areas to cruise with ease.

(Automatic fuel composition-switching system)

Emission limitation for NOx and SOx differs among areas. In general, emission limitation is strictly imposed in coastal waters around the North American continent and the European continent, and emission control is lax in the other areas including open oceans. Hereinafter, an area where emission limitation for NOx and SOx is strictly imposed is referred to as "control area", and an area where the emission limitation is lax is referred to as "global area".

Since emission limitation for NOx and SOx is strictly imposed in a control area, it is required to use a fuel with low emission of NOx and SOx, such as the fuel composition of the present embodiment. On the other hand, in a global area, emission limitation for NOx and SOx is laxer than in a control area, and thus it is not necessarily needed to use a fuel containing GTL such as the fuel composition of the present embodiment. Fuel compositions having a high ratio of GTL as fuel oil are more expensive than those having a low ratio of GTL as fuel oil.

In such circumstances, compliance with emission limitation in various areas and reduction of fuel cost can be simultaneously achieved through providing the ship 10 with an automatic fuel composition-switching system to automatically change the mixing ratio of a raw material oil (collective term for the low-sulfur fuels and gas-to-liquid oil (GTL), herein) and water in the mixer 16 according to the area where the ship 10 is currently located. Specifically, the automatic fuel composition-switching system of the present embodiment selects a first fuel composition at least complying with emission control for air pollutants in a control area or a second fuel composition acceptable for use in a non-control area and forms the selected fuel composition in the mixer 16 by changing the mixing ratio of a raw material oil and water in the mixer, on the basis of a chart storing control area boundary information indicating a location of a border between the control area where emission of air pollutants is more strictly controlled than in the non-control area, and the non-control area and of information on the current position of the ship; and compares information on the current position of the ship with the control area boundary information stored in the chart, and forms the first fuel composition in the mixer in a case where the ship is located in the control area and forms the second fuel composition in the mixer in a case where the ship is located in the non-control area. Hereinafter, the automatic fuel composition-switching system will be described in detail. Although a case of using light cycle oil (LCO) as the low-sulfur fuels is described in the following, the low-sulfur fuels may be an oxygen-containing hydrocarbon-based fuel or a biofuel, or a mixture of them.

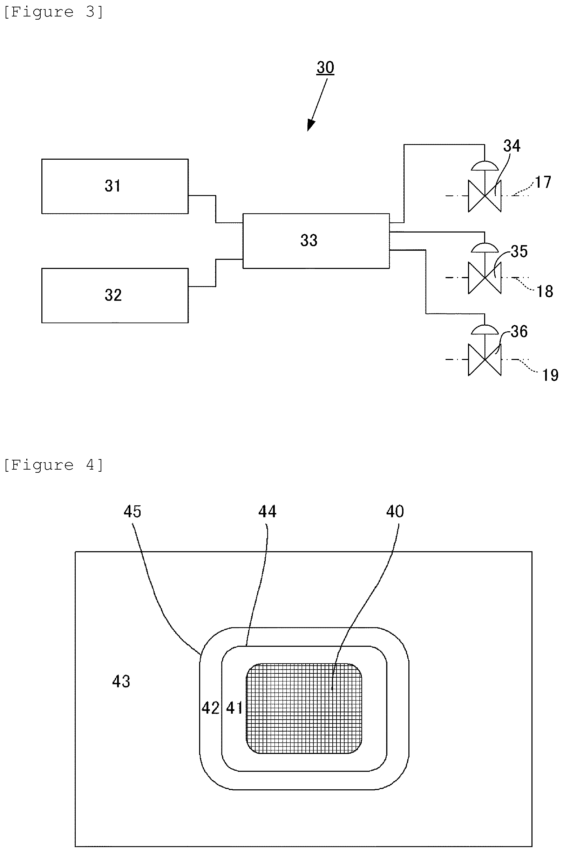

Figure 3 is a conceptual diagram illustrating the hardware configuration of an automatic fuel composition-switching system 30. As illustrated in Figure 3, the automatic fuel composition-switching system 30 is configured with an electronic chart unit 31, a position information acquisition unit 32, and a mixing ratio changer 33.

The electronic chart unit 31 is a unit composed by storing control area boundary information indicating a location of a border between a control area and a preparation area set outside of the control area and preparation area boundary information indicating a location of a border between the preparation area and a global area further outside of the preparation area, in a known apparatus configured to store computerized chart information and display it, as necessary. The control area boundary information and preparation area boundary information will be described in detail later.

The position information acquisition unit 32 is a geodetic device, for example, utilizing the GPS (Global Positioning System), and is configured to acquire the position on the earth at which the ship 10 is currently located on a real-time basis.

The mixing ratio changer 33 is an apparatus including a computer not illustrated, and configured to compare position information for the ship 10 input from the position information acquisition unit 32 with the control area boundary information and preparation area boundary information stored in the electronic chart unit 31, and change the mixing ratio of a raw material oil and water in the mixer 16 according to the current position of the ship 10. The pipelines 17 to 19 include regulation valves 34 to 36, respectively, and each of the regulation valves 34 to 36 is controlled to change the aperture by the mixing ratio changer 33. When the regulation valve 34 is opened, the flow rate of light cycle oil (LCO) flowing from the LCO tank 13 into the mixer 16 increases, and when the regulation valve 34 is tightened, the flow rate of light cycle oil (LCO) decreases. Similarly, when the regulation valve 35 is opened, the flow rate of gas-to-liquid oil (GTL) flowing from the GTL tank 14 into the mixer 16 increases, and when the regulation valve 35 is tightened, the flow rate of gas-to-liquid oil (GTL) decreases. When the regulation valve 36 is opened, the flow rate of water flowing from the fresh water tank 15 into the mixer 16 increases, and when the regulation valve 36 is tightened, the flow rate of water decreases.

Now, the control area boundary information and preparation area boundary information will be described. Figure 4 is a conceptual diagram illustrating the concepts of a control area boundary and a preparation area boundary. As illustrated in Figure 4, a control area 41, where emission of NOx and SOx is strictly controlled, is set around land 40 (specifically, the North American continent, for example) as a living area for humans. A "non-control area", specifically, an area where emission limitation for NOx and SOx is lax lies out of the control area 41. Herein, a zonal area connecting to the control area 41 in the "non-control area" is referred to as preparation area 42. "Preparation area" refers to an area where preparation for change of a fuel composition to be used by the ship 10 which is to move into the control area 41 (e.g., change from a fuel composition having a low ratio of GTL to a fuel composition having a high ratio of GTL) is performed. An area lying out of the preparation area 42, in other words, an area composed by excluding the preparation area 42 from the "non-control area" is referred to as global area 43. The border line between the control area 41 and the preparation area 42 is referred to as control area boundary 44, and the border line between the preparation area 42 and the global area 43 is referred to as preparation area boundary 45.

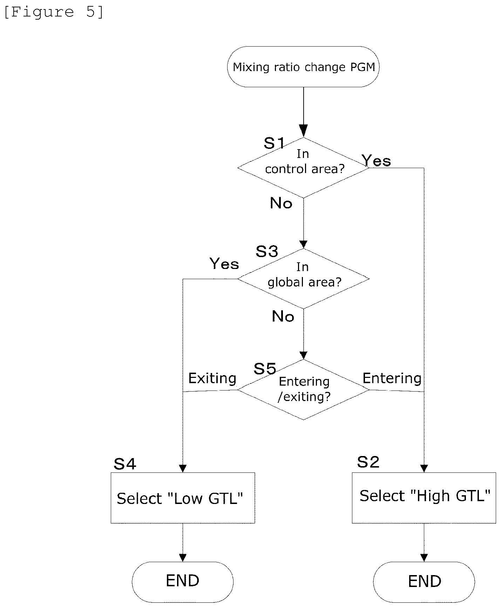

A mixing ratio change program configured to execute a process as illustrated in Figure 5 is installed in the mixing ratio changer 33, and the mixing ratio changer 33 executes the program, for example, every 2 minutes. Now, the process by the program will be described with reference to Figure 5.

On execution of the mixing ratio change program, the mixing ratio changer 33 reads information on the current position of the ship 10 from the position information acquisition unit 32. Subsequently, the mixing ratio changer 33 compares the information on the current position of the ship 10 read from the position information acquisition unit 32 with the control area boundary information stored in the electronic chart unit 31.

If the ship 10 is determined to be located in the inside of the control area boundary 44, in other words, the ship 10 is determined to be located in the control area 41 (step S1: Yes) from the result of the comparison between the current position information and the control area boundary information, then the program proceeds to the step S2 to select "High GTL", and the process is terminated. Selecting "High GTL" means controlling the aperture of each of the regulation valves 34 to 36 so that a fuel composition having a high ratio of GTL is formed in the mixer 16.

If the ship 10 is determined not to be located in the control area 41 in the step S1 (step S1: No), then the program proceeds to the step S3 to compare the information on the current position of the ship 10 with the preparation area boundary information stored in the electronic chart unit 31. If the ship 10 is determined to be located out of the preparation area boundary 45, in other words, the ship 10 is determined to be located in the global area 43 (step S3: Yes) from the result, then the program proceeds to the step S4 to select "Low GTL", and the process is terminated. Selecting "Low GTL" means controlling the aperture of each of the regulation valves 34 to 36 so that a fuel composition having a low ratio of GTL is formed in the mixer 16.

If the ship 10 is determined not to be located in the global area 43 in the step S3 (step S3: No), then the program proceeds to the step S5. Since the ship 10 is located neither in the control area 41 nor in the global area 43 in this case, it follows that the ship 10 is located in the preparation area 42. In the step S5, the direction of travel of the ship 10 is determined. Specifically, whether the ship 10 is moving in the direction such that the ship 10 is approaching to the control area 41 (the direction of entering the control area 41) or the ship 10 is moving in the direction such that the ship 10 is leaving the control area 41 (the direction of exiting the control area 41) is determined. The determination of the direction of travel is performed through comparison between the current position information acquired in the last execution (i.e., the execution 2 minutes before) of the mixing ratio change program and the current position information currently acquired.

If the ship 10 is determined to be moving in the direction of entering the control area 41 in the step S5, then the program proceeds to the step S2 to select "High GTL", and the process is terminated. If the ship 10 is determined to be moving in the direction of exiting the control area 41, on the other hand, then the program proceeds to the step S4 to select "Low GTL", and the process is terminated.

Since the automatic fuel composition-switching system 30 is configured as described above, the fuel composition having a high ratio of GTL is formed in the mixer 16 when the ship 10 is located in the control area 41. That is, a fuel composition complying with emission control for air pollutants in the control area 41 is formed. When the ship 10 is located in the global area 43, the fuel composition having a low ratio of GTL is formed in the mixer 16. That is, a fuel composition acceptable for use in the global area 43 is formed.

When the ship 10 is to move from the global area 43 into the control area 41, the fuel composition to be formed in the mixer 16 is changed to the fuel composition having a high ratio of GTL in the preparation area 42. That is, the fuel composition to be formed in the mixer 16 is changed to a fuel composition complying with emission control for air pollutants in the control area 41 before the ship 10 enters the control area 41. When the ship 10 is to move from the control area 41 into the global area 43, the fuel composition to be formed in the mixer 16 is changed to the fuel composition having a low ratio of GTL on arrival in the preparation area 42. That is, the fuel composition to be formed in the mixer 16 is changed to a fuel composition acceptable for use in the global area 43 after the ship 10 exits the control area 41.

In this way, the automatic fuel composition-switching system 30 can automatically change the fuel composition to be formed in the mixer 16 according to the area where the ship 10 is located. Specifically, a fuel composition complying with emission control for air pollutants in the control area 41 is automatically fed into the diesel engine 12 when the ship 10 is located in the control area 41, and a relatively inexpensive fuel composition acceptable for use in the global area 43 is automatically fed into the diesel engine 12 when the ship 10 is located in the global area 43.

According to the present embodiment, as described above, a fuel composition in a state of emulsion containing: a low-sulfur fuel such as light cycle oil (LCO); a gas-to-liquid oil (GTL); and water exhibits ignitability further superior to that expected for a fuel composition obtained by emulsifying a gas-to-liquid oil (GTL) solely with water. For this reason, the fuel composition of the present embodiment can be used as a main fuel for conventional diesel engines including no pilot injector.

Primarily because of the low sulfur contents of GTL and the low-sulfur fuels in the fuel composition of the present embodiment, a ship using the fuel composition as a fuel for a propulsion engine can comply with emission control for sulfur oxides (SOx) with ease. Further, by virtue that the fuel composition of the present embodiment contains the low-sulfur fuels and water, the combustion temperature when the fuel composition is burned in a combustion chamber of a diesel engine can be set low. As a result, the formation and emission of nitrogen oxides (NOx) is reduced. Accordingly, a ship using the fuel composition of the present embodiment as a fuel for a propulsion engine can comply with emission control for nitrogen oxides (NOx) with ease.

In addition, the automatic fuel composition-switching system of the present embodiment can automatically select the characteristics of a fuel to be used for a ship according to an area where the ship is located. Specifically, fuel complying with emission control is automatically selected when the ship is located in an area where emission of air pollutants is strictly controlled, and a relatively inexpensive fuel acceptable for use in a non-control area is automatically selected when the ship is located in a non-control area.

The present invention is not limited to the present embodiment. The present invention can be variously modified unless the modification deviates from the spirit.

The application of the fuel composition of the present embodiment is not limited to a diesel fuel. For example, the fuel composition of the present embodiment can be used even as a boiler fuel.

The ship of the present embodiment is not limited to the ships 10 exemplified in Figures 1 and 2 in any way. Specifically, the ship of the present embodiment is not limited to the ship 10 including the mixer 16. For example, the fuel composition of the present embodiment produced in advance in a plant on land may be installed in a ship and used as a fuel for a propulsion engine of the ship. The buffer tank 21 in the ship of the present embodiment is an optional component. For example, the buffer tank 21 is not required if the production (discharge) rate of the fuel composition in the mixer 16 is controlled so as to increase or decrease according to increase or decrease in the consumption rate of the fuel composition in the diesel engine 12.

The mixer 16 can be disposed in an arbitrary compartment in the ship of the present embodiment. The mixer 16 may be disposed in a compartment for the diesel engine 12, namely, an engine room, or in a compartment being not an engine room. Each of the tanks (the LCO tank 13, the GTL tank 14, the fresh water tank 15, and the mixed oil tank 23) can be arbitrarily disposed in the ship of the present embodiment. Tanks are generally disposed in the bottom of a ship (double bottom) or the side of a ship (an interspace between the outer side shell and inner side shell of a ship), but the position of each tank is not limited thereto. The ship of the present embodiment is not limited to merchant ships. The ship of the present embodiment may be a passenger ship, a fishing boat, or another type of ship such as a special ship and a ship for a government or ministries.

The hardware configuration of the automatic fuel composition-switching system illustrated in Figure 3 and the process by the mixing ratio change program illustrated in Figure 5 are examples, and are not limited thereto in any way.

Specific configurations of the hardware and software are arbitrary. Although the mixing ratio change program is executed every 2 minutes in the above description of the present embodiments, the frequency of execution of the mixing ratio change program is arbitrary. For example, the frequency of execution may be determined according to the ship speed. Specifically, the frequency of execution may be increased when the ship speed is high and decreased when the ship speed is low.

The width of the preparation area 42 illustrated in Figure 4 is arbitrary. A width such that change of the fuel composition can be completed while the ship 10 is passing through the preparation area 42 can be suitably selected for the width of the preparation area 42. For example, the width of the preparation area 42 can be suitably set with consideration of the fuel consumption rate of the diesel engine 12 and the capacity of the buffer tank 21 so that the fuel composition having a low ratio of GTL stored in the buffer tank 21 on entering of the ship 10 into the preparation area 42 can be completely consumed in the preparation area 42. Alternatively, the capacity of the buffer tank 21 may be set so that the fuel composition having a low ratio of GTL in the buffer tank 21 on entering of the ship 10 into the preparation area 42 can be completely consumed in the preparation area 42.

Although use of the fuel composition as a fuel for the diesel engine 12 to drive the propeller 11 of the ship 10, in other words, a propulsion engine (main engine) of the ship 10 is exemplified in the above present embodiments, the application of the fuel composition of the present embodiment is not limited to a fuel for a main engine of a ship in any way. The fuel composition of the present embodiment can be used as a fuel for an auxiliary engine of a ship, specifically, a generator or the like, or a fuel for a plant placed on land.

Examples

Hereinafter, the present invention will be described in more detail with Examples; but the present invention is not limited to Examples.

(Characteristics of raw material oils)

The characteristics of light cycle oil (LCO) as a low-sulfur fuel and gas-to-liquid oil (GTL) used in Examples are shown in Table 1.

[Table 1]

|  | LCO | GTL |
|---|---|---|
| Density (kg/m$^3$) | 893 | 784 |
| Lower heating value (MJ/kg) | 41.1 | 43.6 |
| Lower heating value (MJ/m$^3$) | 36702 | 34182 |
| Cetane number | 20-30 | 87.8 |
| Carbon content (% by mass) | 89.4 | 84.8 |
| Hydrogen content (% by mass) | 10.6 | 15.1 |
| Total aromatic content (% by volume) | 73.5 | <0.1 |
| Sulfur content (% by mass) | 0.2-0.3 | 0.0 |

(Production of fuel compositions)

LCO, GTL, and water were blended with blend ratios (unit: part by mass) shown in the following Table 2, and then sufficiently stirred and mixed to afford fuel compositions of Examples and Comparative Examples.

[Table 2]

|  | LCO (part by mass) | GTL (part by mass) | Water (part by mass) |
|---|---|---|---|
| Example 1 | 50 | 50 | 100 |
| Example 2 | 50 | 50 | 60 |
| Example 3 | 50 | 50 | 30 |
| Example 4 | 70 | 30 | 30 |

(continued)

|  | LCO (part by mass) | GTL (part by mass) | Water (part by mass) |
|---|---|---|---|
| Example 5 | 30 | 70 | 100 |
| Example 6 | 30 | 70 | 30 |
| Comparative Example 1 | 0 | 100 | 100 |
| Comparative Example 2 | 0 | 100 | 60 |
| Comparative Example 3 | 0 | 100 | 30 |
| Comparative Example 4 | 0 | 100 | 0 |
| Comparative Example 5 | 50 | 50 | 0 |
| Comparative Example 6 | 70 | 30 | 0 |
| Comparative Example 7 | 100 | 0 | 0 |

(Measurement of Cetane number)

The Cetane number of each of the fuel compositions of Examples 1 to 4 and Comparative Examples 1 to 7 was measured as described above. The results are shown in Table 3.

[Table 3]

|  | Cetane number |
|---|---|
| Example 1 | 18.0 |
| Example 2 | 23.1 |
| Example 3 | 29.4 |
| Example 4 | 23.6 |
| Comparative Example 1 | 26.0 |
| Comparative Example 2 | 30.8 |
| Comparative Example 3 | 50 |
| Comparative Example 4 | 88.9 |
| Comparative Example 5 | 36.6 |
| Comparative Example 6 | 29.3 |
| Comparative Example 7 | 20 |

The results shown in Table 3 demonstrate that Cetane numbers when only GTL was used as fuel oil (Comparative Examples 1 to 4) exhibited significant decrease from a Cetane number of 88.9 when water was not contained (Comparative Example 4) to 50, 30.8, and 26.0 as the content of water increased, and drastic decrease to 56.2, 34.6, and 29.2 in relative comparison as the cetane number of 88.9 was defined as 100. When only LCO was used as fuel oil, the Cetane number when water was not contained (Comparative Example 7) was 20, and ignition barely occurred, but did not occurred when water was contained, though this is not shown in the table. When both GTL and LCO were used as fuel oil, in contrast, Cetane numbers were 29.4, 23.1, and 18.0 (when the ratio between LCO and GTL was 50:50; Examples 1 to 3) even as the content of water increased, exhibiting no significant decrease from a Cetane number of 36.6 when water was not contained (Comparative Example 5), and specifically 80.3, 63, 1, and 49.2 in relative comparison as the Cetane number of 33.6 was defined as 100, indicating that the degree of reduction decreased as compared with the cases with use of GTL only. When the ratio between LCO and GTL was 70:30 (Example 4), the Cetane number was 23.6, which was not significant decrease from a cetane number of 29.3 when water was not contained (Comparative Example 6), and 80.5 in relative comparison. In summary, the fuel composition of the present invention exhibited ignitability further better than that expected for a fuel composition obtained by emulsifying gas-to-liquid oil solely with water.

(Combustion test)

To examine the performance of each fuel composition, a combustion test was conducted by using a large low-speed two-stroke cycle diesel engine. The specification of the diesel engine was as follows.
Model: two-stroke single-acting crosshead-shaped constant pressure supercharging mode with electronically controlled single scavenging/exhaust turbine supercharger
Cylinder diameter: 330 mm
Stroke: 1050 mm
Number of cylinders: 3
Rotational speed: 162 rpm
Maximum power: 1275 kW (1734 PS)
Net mean effective pressure: 1.752 MPa
Rotational Speed and power at 25% loading: 102 rpm, 318 kW
Rotational Speed and power at 50% loading: 129 rpm, 637 kW
Rotational Speed and power at 75% loading: 147 rpm, 956 kW
Rotational Speed and power at 100% loading: 162 rpm, 1275 kW

(Component analysis of exhaust gas)

Exhaust gases obtained in the combustion test for the fuel compositions were analyzed to obtain results as shown in Table 4. In Table 4, each of "25%", "50%", "75%" and "100%" indicates the corresponding load applied to the diesel engine. "E3 mode" is a calculated value with an emission coefficient of NOx respectively assigned 0.15 for 25% and 50% loading, 0.5 for 75% loading, and 0.2 for 100% loading.

[Table 4]

| | $NO_X$ (g/kWh) | | | | |
|---|---|---|---|---|---|
| | 25% | 50% | 75% | 100% | E3 mode |
| Example 1 | 8.68* | 2.55 | 2.14 | 1.59 | 3.07 |
| Example 2 | 8.68 | 4.70 | 4.93 | 4.13 | 5.30 |
| Example 4 | 14.74 | 7.84 | 7.19 | 6.85 | 8.35 |
| Example 5 | 5.38 | 2.79 | 2.03 | 1.47 | 2.53 |
| Comparative Example 1 | 5.28 | 2.85 | 1.77 | 1.26 | 2.36 |
| Comparative Example 4 | 15.53 | 7.60 | 7.58 | 8.22 | 8.90 |

| | $NO_X$ (ppm) | | | |
|---|---|---|---|---|
| | 25% | 50% | 75% | 100% |
| Example 3 | --- | --- | 917 | --- |
| Comparative Example 4 | 1752 | 1004 | 1087 | 1105 |
| Comparative Example 5 | 1671 | 860 | 908 | 962 |

| | Soot (smoke concentration: K) | | | |
|---|---|---|---|---|
| | 25% | 50% | 75% | 100% |
| Example 2 | 0.030 | 0.058 | 0.063 | 0.068 |
| Example 3 | --- | --- | 0.068 | --- |
| Comparative Example 1 | 0.025 | 0.061 | 0.061 | 0.061 |
| Comparative Example 4 | 0.028 | 0.058 | 0.070 | 0.078 |
| Comparative Example 5 | 0.032 | 0.080 | 0.075 | 0.078 |

*This was substituted with the value for Example 2 because pressure variation was occurred in the combustion chamber.

As is clear from the results shown in Table 4, the fuel composition of the present invention, in spite of the relatively high LCO content, successfully complied with the NOx Tier III regulation (<3.253 g/kWh).

(Evaluation of fuel consumption rate)

The fuel consumption rate of each of the fuel compositions was evaluated by the combustion test (75% loading) for the fuel compositions. The results are shown in Table 5.

[Table 5]

|  | Fuel consumption rate (g/kWh) |
| --- | --- |
| Example 3 | 180.0 |
| Comparative Example 3 | 184.0 |
| Comparative Example 5 | 184.5 |
| Comparative Example 4 | 186.5 |

It is understood from the results shown in Table 5 that in view of comparison between the fuel using only GTL (Comparative Example 4) and the fuel composition obtained by emulsifying GTL solely with water (Comparative Example 3), the fuel composition obtained by emulsifying LCO and GTL with water (Example 3) exhibited a better fuel consumption rate than that expected for a non-emulsion fuel containing LCO and GTL (Comparative Example 5).

Industrial Applicability

The present invention is useful for a fuel composition, a ship, and an automatic fuel composition-switching system.

Reference Signs List

| | |
| --- | --- |
| 10 | ship |
| 11 | propeller |
| 12 | diesel engine |
| 13 | LCO tank |
| 14 | GTL tank |
| 15 | fresh water tank |
| 16 | mixer |
| 17, 18, 19, 20 | pipeline |
| 21 | buffer tank |
| 22 | pipeline |
| 23 | mixed oil tank |
| 30 | automatic fuel composition-switching system |
| 31 | electronic chart unit |
| 32 | position information acquisition unit |
| 33 | mixing ratio changer |
| 34, 35, 36 | regulation valve |
| 40 | land |
| 41 | control area |
| 42 | preparation area |
| 43 | global area |
| 44 | control area boundary |
| 45 | preparation area boundary |

**Claims**

1. A fuel composition comprising an emulsion comprising: one or more low-sulfur fuels selected from the group consisting of light cycle oil, an oxygen-containing hydrocarbon-based fuel, and a biofuel; gas-to-liquid oil; and water.

2. The fuel composition according to claim 1, wherein the low-sulfur fuels comprise light cycle oil.

3. The fuel composition according to claim 1 or 2, wherein a sulfur content of the low-sulfur fuels is 0.5% by mass or less.

4. The fuel composition according to any one of claims 1 to 3, wherein a content of the water is 10% by mass or more and 150% by mass or less based on a total mass of the low-sulfur fuels and the gas-to-liquid oil of 100% by mass.

5. The fuel composition according to any one of claims 1 to 4, wherein the emulsion is a water-in-oil emulsion.

6. The fuel composition according to any one of claims 1 to 5, wherein a content of the gas-to-liquid oil is 20% by mass or more based on a total mass of the low-sulfur fuels and the gas-to-liquid oil of 100% by mass.

7. The fuel composition according to any one of claims 1 to 6, wherein a content of the water is 70% by mass or more and 120% by mass or less based on a total mass of the low-sulfur fuels and the gas-to-liquid oil of 100% by mass.

8. A ship using the fuel composition according to any one of claims 1 to 7 as a fuel for a propulsion engine.

9. The ship according to claim 8, comprising:

   tanks configured to store the water, the low-sulfur fuels, and the gas-to-liquid oil, respectively; and
   a mixer configured to mix the water, the low-sulfur fuels, and the gas-to-liquid oil fed from the respective tanks to produce the fuel composition.

10. The ship according to claim 8, comprising:

    a tank configured to store the water;
    a tank configured to store a mixed oil prepared by mixing the low-sulfur fuels and the gas-to-liquid oil; and
    a mixer configured to mix the water and the mixed oil fed from the respective tanks to produce the fuel composition.

11. An automatic fuel composition-switching system to be installed in the ship according to claim 8 or 9, the automatic fuel composition-switching system comprising:

    an electronic chart unit storing control area boundary information indicating a location of a border between a control area where emission of air pollutants is more strictly controlled than a non-control area, and the non-control area;
    a position information acquisition unit configured to acquire information on a current position of the ship; and
    a mixing ratio changer configured to select a first fuel composition at least complying with emission control for air pollutants in the control area or a second fuel composition acceptable for use in the non-control area and form the selected fuel composition in the mixer by changing a mixing ratio of a raw material oil and water in the mixer, wherein
    the mixing ratio changer compares the information on the current position of the ship acquired by the position information acquisition unit and the control area boundary information stored in the electronic chart unit, and forms the first fuel composition in the mixer in a case where the ship is located in the control area and forms the second fuel composition in the mixer in a case where the ship is located in the non-control area.

12. The automatic fuel composition-switching system according to claim 11, wherein the mixing ratio changer changes a fuel composition formed in the mixer to the first fuel composition before the ship enter the control area when the ship is to move from the non-control area into the control area, and to the second fuel composition after the ship exits the control area when the ship is to move from the control area to the non-control area.

13. A ship comprising the automatic fuel composition-switching system according claim 11 or 12 installed therein.

[Figure 1]

[Figure 2]

[Figure 3]

[Figure 4]

[Figure 5]

```
                    ╭──────────────────────╮
                    │ Mixing ratio change PGM │
                    ╰──────────────────────╯
                              │
                              ▼
                    S1    ╱────────╲
                         ╱    In    ╲    Yes
                         ╲ control area? ╲─────────────┐
                          ╲────────╱                   │
                              │ No                      │
                              ▼                         │
                    S3    ╱────────╲                    │
              Yes        ╱    In     ╲                  │
          ┌─────────────╲ global area? ╲                │
          │              ╲────────╱                     │
          │                  │ No                       │
          │                  ▼                          │
          │   Exiting S5 ╱────────╲  Entering           │
          │ ┌───────────╲ Entering  ╲───────────┐       │
          │ │            ╲ /exiting? ╱           │       │
          │ │             ╲────────╱             │       │
          │ ▼                                    ▼       ▼
        S4 ┌──────────────────┐        S2 ┌──────────────────┐
           │  Select "Low GTL" │           │ Select "High GTL" │
           └──────────────────┘           └──────────────────┘
                    │                               │
                    ▼                               ▼
              ╭──────────╮                    ╭──────────╮
              │   END    │                    │   END    │
              ╰──────────╯                    ╰──────────╯
```

## INTERNATIONAL SEARCH REPORT

| International application No. |
|---|
| PCT/JP2017/006568 |

**A. CLASSIFICATION OF SUBJECT MATTER**
*C10L1/32*(2006.01)i, *B63H21/38*(2006.01)i, *F02M25/022*(2006.01)i

According to International Patent Classification (IPC) or to both national classification and IPC

**B. FIELDS SEARCHED**

Minimum documentation searched (classification system followed by classification symbols)
C10L1/32, B63H21/38, F02M25/022

Documentation searched other than minimum documentation to the extent that such documents are included in the fields searched
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2006-506481 A (Shell Internationale Research Maatschappij B.V.), 23 February 2006 (23.02.2006), claims; paragraphs [0016], [0037], [0039], [0050] & WO 2004/044107 A1 claims; page 5, lines 13 to 24; page 11, lines 18 to 22 | 1,3-8<br>1-13 |
| X<br>Y<br>A | WO 1999/063025 A1 (CLEAN FUELS TECHNOLOGY, INC.), 09 December 1999 (09.12.1999), abstract; page 3, line 29 to page 4, line 1; example 1; page 19, line 15 to page 20, line 16; example 5; page 23, line 19 to page 24, line 2 (Family: none) | 1,3-7<br>8-13<br>2 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 April 2017 (27.04.17) | 16 May 2017 (16.05.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

## INTERNATIONAL SEARCH REPORT

| | International application No. |
|---|---|
| | PCT/JP2017/006568 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-515950 A (Exxonmobil Research and Engineering Co.), 25 September 2001 (25.09.2001), claims; paragraphs [0004], [0020] & WO 1999/013031 A1 claims; page 1, lines 18 to 23; page 5, lines 18 to 21 | 1-13 |
| Y | WO 2014/104103 A1 (Oshima Shipbuilding Co., Ltd.), 03 July 2014 (03.07.2014), claims; paragraphs [0022], [0028], [0030] (Family: none) | 1-13 |
| Y | JP 09-317587 A (Mitsubishi Heavy Industries, Ltd.), 09 December 1997 (09.12.1997), claims; paragraphs [0002], [0018] (Family: none) | 11-13 |
| Y | JP 2007-331484 A (Sumitomo Heavy Industries Marine & Engineering Co., Ltd.), 27 December 2007 (27.12.2007), paragraphs [0001], [0013] to [0016]; fig. 1 (Family: none) | 11-13 |
| E,X | WO 2017/029913 A1 (Oshima Shipbuilding Co., Ltd.), 23 February 2017 (23.02.2017), claims (Family: none) | 1-13 |

Form PCT/ISA/210 (continuation of second sheet) (January 2015)

## INTERNATIONAL SEARCH REPORT

International application No.

PCT/JP2017/006568

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
   See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

International application No.

PCT/JP2017/006568

Continuation of Box No.III of continuation of first sheet(2)

Document 1: JP 2006-506481 A (Shell International Research Maatschappij B.V.), 23 February 2006 (23.02.2006), claims; paragraphs [0016], [0037], [0039], [0050] & WO 2004/044107 A1, claims; page 5, lines 13 to 24; page 11, lines 18 to 22

Document 2: WO 1999/063025 A1 (CLEAN FUELS TECHNOLOGY, INC.), 09 December 1999 (09.12.1999), abstract; page 3, line 29 to page 4, line 1; example 1; page 19, line 15 to page 20, line 16; example 5; page 23, line 19 to page 24, line 2 (Family: none)

Claims are classified into the following two inventions.

(Invention 1) claims 1-10

In documents 1-2, a fuel composition which contains an emulsion comprising an oxygen-containing hydrocarbon-type fuel, a gas-to-liquid oil and water is disclosed. Therefore, claim 1 is not novel over documents 1-2, and has no special technical feature.

However, claim 2, which depends on claim 1, has the special technical feature "a fuel composition which contains an emulsion comprising a light cycle oil, a gas-to-liquid oil and water", and parts of the inventions descried in claims 1-10, in which the "fuel composition which contains an emulsion comprising a light cycle oil, a gas-to-liquid oil and water" is specified, also have the same special technical feature as that of claim 1.

Therefore, the above-said parts of the claims 1-10 are classified into Invention 1.

Further, the parts of claims 1-10 other than the above-said parts have an inventive relationship with claim 1, and are therefore classified into Invention 1.

(Invention 2) claims 11-13

Claim 11 is a claim depending on claim 8 which refers to claim 1 that is classified into Invention 1. A specific "fuel composition automatic switching system" described in claim 11, which is a technical feature added to claim 8 that refers to claim 1, has poor technical relation with a "fuel composition which contains an emulsion comprising a low-sulfur fuel, a light cycle oil, a gas-to-liquid oil and water" which is the technical feature of claim 1.

Therefore, it is not considered that claims 11-13 have an inventive relationship with claim 1.

In addition, claims 11-13 have no relationship such that these claims are substantially same as or equivalent to any claim classified into Invention 1.

Consequently, claims 11-13 cannot be classified into Invention 1.

Claims 11-13 have a special technical feature, i.e., a specific "fuel composition automatic switching system" which is intended to be installed in "a ship in which 'a fuel composition which contains an emulsion comprising a light cycle oil, a gas-to-liquid oil and water' is used as the fuel for a propulsion engine", and are classified into Invention 2.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001158890 A
- JP 2014221872 A
- JP 8246961 A